# FASCICULE DE BREVET EUROPEEN

(11) **EP 3 429 718 B1**
(45) Date de publication et mention de la délivrance du brevet: **18.12.2019**
(21) Numéro de dépôt: 17710308.2
(22) Date de dépôt: 15.03.2017
(51) Int. Cl.: B01D 17/04, C10G 33/04

(54) **DESEMULSIFIANT POUR PETROLE**
ERDÖLDEMULGATOR
PETROLEUM DEMULSIFIER

(30) Priorité: 18.03.2016 FR 1652359
(43) Date de publication de la demande: 23.01.2019
(73) Titulaire: Oleon N.V., 9940 Evergem (Ertvelde) (BE)
(72) Inventeur: BARREAU, Sébastien, 60400 Noyon (FR); PACKET, Dirk, 3110 Rotselaar (BE); COULEON, Pauline, 78700 Conflans Sainte Honorine (FR); FOUQUET, Marine, 94210 La Varenne Saint Hilaire (FR)
(74) Mandataire: Santarelli
(86) Numéro de dépôt international: PCT/EP2017/056166
(87) Numéro de publication internationale: WO 2017/158054

(56) Documents cités:
- WO-A1-2015/174870
- RITA SILVA ET AL: "Applications of Biosurfactants in the Petroleum Industry and the Remediation of Oil Spills", INTERNATIONAL JOURNAL OF MOLECULAR SCIENCES, vol. 15, no. 7, 15 juillet 2014 (2014-07-15), pages 12523-12542, XP055321382, DOI: 10.3390/ijms150712523
- MASAAKI KONISHI ET AL: "Efficient production of mannosylerythritol lipids with high hydrophilicity by Pseudozyma hubeiensis KM-59", APPLIED MICROBIOLOGY AND BIOTECHNOLOGY, SPRINGER, BERLIN, DE, vol. 78, no. 1, 11 décembre 2007 (2007-12-11), pages 37-46, XP019586269, ISSN: 1432-0614
- Mazaheri Assadi ET AL: "Biosurfactants and their Use in Upgrading Petroleum Vacuum Distillation Residue: A Review", Int. J. Environ. Res, 31 décembre 2010 (2010-12-31), pages 549-572, XP055321377, Extrait de l'Internet: URL:https://ijer.ut.ac.ir/article_242_89c8 5be389c3e1636d44cb63a1db22ac.pdf [extrait le 2016-11-21]

## Description

La présente invention se rapporte à une composition comportant du pétrole, de l'eau et un désémulsifiant, et en particulier à un procédé de désémulsification d'émulsions de pétrole et d'eau.

Une émulsion est une suspension d'un liquide sous forme de particules ou gouttelettes dans un autre liquide, ces deux liquides étant non miscibles entre eux. Les deux liquides non miscibles d'une émulsion sont généralement désignés par «phase aqueuse» et «phase huileuse».

L'invention concerne en particulier des émulsions de pétrole (phase huileuse) et d'eau (phase aqueuse). De telles émulsions peuvent se former lorsque de l'eau et du pétrole, mis en contact, sont soumis à des forces, telles que des forces de cisaillement. A titre d'exemple, à l'extérieur d'un puits de forage, de telles émulsions se créent au niveau des têtes de puits, dans des vannes, dans des pompes, ou dans des tubes de production.

Pour des raisons économiques et des problèmes de corrosion, le pétrole doit être débarrassé de l'eau avant tout transport ou transformation.

Une solution efficace pour séparer la phase huileuse d'une phase aqueuse d'une émulsion, est d'utiliser un désémulsifiant.

Un désémulsifiant est un composé ou un mélange de composés, favorisant la désémulsification.

La désémulsification, également appelée cassage d'une émulsion, est la séparation de la phase huileuse et de la phase aqueuse.

Plusieurs désémulsifiants ont été décrits. Toutefois, la plupart d'entre eux présentent une certaine toxicité, que ce soit pour l'homme et/ou l'environnement, et/ou un impact écologique non négligeable.

Avec une production journalière mondiale de plus de 80 millions de barils de pétrole, c'est chaque jour, des millions de litres de pétrole à désémulsifier.

Or, la mise en oeuvre d'un désémulsifiant dans le cadre du traitement du pétrole avant raffinage, suggère :
- d'une part, l'utilisation de quantité non négligeable de désémulsifiant, et
- d'autre part, le traitement de l'eau mise en contact avec ce dernier.

Par conséquent, afin de limiter l'impact sur l'environnement, il serait avantageux de disposer d'un désémulsifiant bio-dégradable et bio-renouvelable, et afin de limiter les risques de pollution et les coûts associés à un éventuel traitement des eaux, il serait avantageux de disposer de désémulsifiants faiblement ou pas toxiques.

La demande US20060281931 décrit l'utilisation de polyglycérols alkoxylés réticulés comme désémulsifiants bio-dégradables. Toutefois, les parties alkoxylées, obtenues à partir d'oxydes d'alkylène en C2-C4 ne sont pas d'origine renouvelable.

La demande WO2012177836 décrit l'utilisation de polyorganosiloxanes comme désémulsifiants biodégradables d'émulsion de pétrole. Toutefois, leur biodégradabilité reste limitée, 18% en 28 jours pour l'exemple donné, et ce type de composés n'est pas produit à partir de ressources renouvelables.

Il existe donc toujours une demande en matière de désémulsifiant d'émulsions de pétrole et d'eau, qui soit bio-dégradable, bio-renouvelable et ne présentant pas ou peu de toxicité.

Par ailleurs, les teneurs en constituants (saturés, aromatiques, résines, asphaltènes) des pétroles étant variables selon l'origine géographique, et les émulsions pouvant contenir plus ou moins d'eau, il est souhaitable que le désémulsifiant soit efficace vis-à-vis d'un large panel d'émulsion. Pour des raisons économiques, il est également souhaitable que le désémulsifiant soit efficace en faible quantité. R.Silva et al, Int.J.Mol.Sci 2014, 15, 12523-12542, "Applications of Biosurfactants in the Petroleum Industry and the Remediation of Oil Spills" divulgue l'utilisation de mannosylérythritol dans un mélange comportant de l'eau et du pétrole.

Le travail des inventeurs a permis de mettre en évidence que l'ajout d'un composé particulier à une émulsion de pétrole et d'eau, permet de désémulsifier cette émulsion.

L'invention concerne donc une composition comportant du pétrole, de l'eau et au moins un lipide de mannosylérythritol.

En effet, l'ajout d'un lipide de mannosylérythritol à une émulsion de pétrole et d'eau permet de casser cette émulsion.

Par « pétrole », on entend un mélange d'hydrocarbures, contenant également des composés organiques soufrés, oxygénés et/ou azotés. Il peut s'agir aussi bien de pétrole brut, c'est-à-dire provenant directement d'un gisement, que d'un pétrole synthétique, c'est-à-dire un pétrole reconstitué à partir de fractions d'hydrocarbures et/ou de composés obtenus par un procédé de synthèse (et non par distillation ou par extraction), ou leurs mélanges, tel que, par exemple, un pétrole brut dilué avec un autre pétrole brut ou un pétrole brut dilué avec un pétrole synthétique.

Par « eau », on entend tout type d'eau, tel qu'une eau déminéralisée ou une eau contenant des sels, telle qu'une eau de mer ou une eau saumâtre. De préférence, l'eau contient des sels.

Par «lipide de mannosylérythritol» ou MEL, on entend un tensioactif comportant une partie hydrophile formée par le groupe mannosylérythritol, et une partie hydrophobe formée par au moins un groupe acyle.

Plus particulièrement, par « MEL », on désigne une molécule présentant la formule générale (I) suivante : 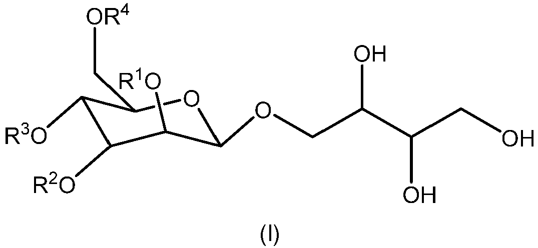 dans laquelle :
- R¹ et R², identiques ou différents, représentent un groupe acyle, comportant une chaine carbonée acyclique insaturée ou saturée, et
- R³ et R⁴, identiques ou différents, représentent un groupe acétyle ou un atome d'hydrogène.

De préférence, la chaine carbonée du groupe acyle est linéaire. En particulier, la chaine carbonée ne comporte que des atomes de carbone et d'hydrogène, éventuellement substituée par une fonction hydroxyle (OH).

Deux stéréoisomères du MEL de formule (I) sont connus et représentés dans les formules (II) et (III) ci-après : 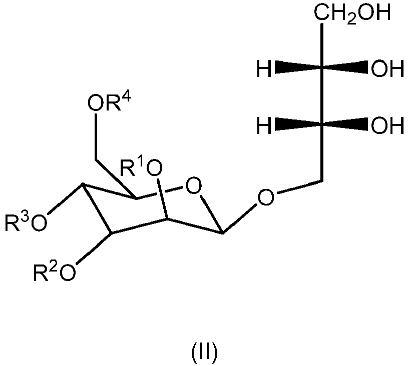 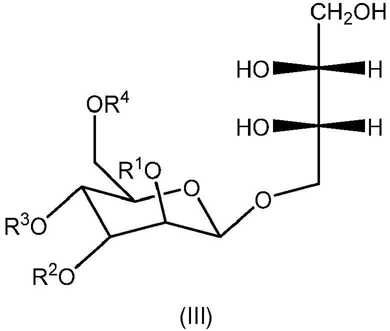 dans lesquelles, R¹, R², R³ et R⁴ sont identiques à ceux indiqués en Formule (I).

Avantageusement, dans la présente invention, un MEL est une molécule de formule (II).

Les formules (I), (II) et (III) ci-avant peuvent représenter plusieurs molécules, chaque molécule étant donc un MEL. Par «MELs», on désigne au moins deux molécules de formules (I) différentes de par leur substitution (groupes acyles, acétyles et/ou hydroxyles) ou par leur stéréoisomérie, plus particulièrement, au moins deux molécules de formules (II) différentes.

Les MELs sont généralement classés en quatre classes de molécules, notées de A à D, selon leur degré d'acétylation en R³ et R⁴. La classe des MELs-A comporte des molécules de formule (I), plus particulièrement, de formule (II) et/ou (III), présentant deux groupes acétyles en R³ et R⁴. La classe des MELs-B et la classe des MELs-C comportent des molécules de formule (I), plus particulièrement, de formule (II) et/ou (III), présentant un seul groupe acétyle en R⁴ et R³ respectivement. Enfin, la classe des MELs-D comporte des molécules de formule (I), plus particulièrement, de formule (II) ou (III), ne présentant pas de groupe acétyle (R³= R⁴=H).

Outre de par leur degré d'acétylation, les MELs peuvent varier dans leur structure, de par la nature des groupes acyles qui composent leur partie hydrophobe. Cette variation est généralement fonction du procédé mis en oeuvre pour l'obtention des MELs.

Les groupes acyles en R¹ et R² comportent de préférence, une chaine carbonée comportant de 8 à 24 atomes de carbone. Plus préférentiellement, les groupes acyles en R¹ et R² sont saturés et comportent une chaine carbonée comportant de 8 à 16 atomes de carbone.

On notera que dans le cadre de la présente demande, et sauf stipulation contraire, les gammes de valeurs indiquées s'entendent bornes incluses.

Les MELs sont généralement obtenus par un procédé de fermentation, c'est-à-dire une transformation d'un substrat carboné par un microorganisme, tel qu'une bactérie, ou une souche de levure.

Les souches à partir desquelles il est possible d'obtenir des MELs sont bien connues de l'homme du métier. A titre d'exemple, il est connu d'utiliser des souches de la famille des Basidiomycètes, de préférence du genre *Pseudozyma*, *telle que Pseudozyma antarctica, Pseudozyma aphidis, Pseudozyma rugulosa, Pseudozyma parantarctica, Pseudozyma graminicola, Pseudozyma siamensis, Pseudozyma hubeiensis*, *Pseudozyma tsukubaensis*, *Pseudozyma crassa*, ou du genre *Ustilago*, telle que *Ustilago maydis, Ustilago cynodontis et Ustilago scitaminea.*

En général, selon la souche, une classe de MEL, MEL(s)-A, MEL(s)-B, MEL(s)-C ou MEL(s)-D, est produite majoritairement, voire exclusivement par rapport aux autres classes de MEL. A titre d'exemple, *Pseudozyma antarctica*, *Pseudozyma aphidis*, *Pseudozyma rugulosa et Pseudozyma parantarctica* produisent en majorité des MELs-A de formule (II). *Pseudozyma graminicola, Pseudozyma siamensis, Pseudozyma hubeiensis* produisent en majorité des MELs-C de formule (II). *Pseudozyma tsukubaensis* produit des MELs-B de formule (III) et *Pseudozyma crassa* produit en majorité des MELs- A de formule (III).

Avantageusement, les MELs visés par la présente demande sont obtenus par un procédé de fermentation mettant en oeuvre une souche produisant des MELs de formule (II).

Plus particulièrement, les MELs mis en oeuvre dans la présente demande sont obtenus par un procédé de fermentation mettant en oeuvre une souche choisie parmi *Pseudozyma aphidis, Pseudozyma rugulosa* ou *Pseudozyma antarctica*, préférentiellement parmi *Pseudozyma aphidis* ou *Pseudozyma antarctica*, plus préférentiellement, la souche est *Pseudozyma aphidis.*

Le substrat carboné est typiquement un glycérol, un n-alcane ou une huile, en particulier d'origine renouvelable.

Toute huile, composée de triglycérides et liquide à la température du procédé de fermentation, peut être utilisée comme substrat carboné.

Préférentiellement, l'huile renouvelable est une huile végétale ou animale, plus préférentiellement, une huile végétale. En particulier, l'huile végétale est choisie parmi le groupe constitué par une huile de soja, une huile de tournesol, une huile d'olive et une huile de colza. Plus particulièrement, l'huile végétale est une huile de soja ou une huile de colza, plus particulièrement encore, une huile de colza.

Ces huiles renouvelables sont particulièrement riches en groupes acyles comportant une chaine carbonée à 18 atomes de carbone, tels que communément appelés, acide oléique, linoléique et/ou linolénique, ainsi que, dans une moindre mesure, en groupes acyles comportant une chaine carbonée à 16 atomes de carbone, tel que communément appelé, acide palmitique.

Le procédé de fermentation dure généralement au moins 3 jours, préférentiellement au moins 7 jours.

Selon un mode de réalisation préférentiel, les MELs sont obtenus par un procédé de fermentation mettant en oeuvre :
- une souche du genre *Pseudozyma*, préférentiellement *Pseudozyma antartica* ou *Pseudozyma aphidis,*
- une huile végétale, préférentiellement une huile de colza ou une huile de soja, en tant que substrat carboné.

Une telle souche est usuellement cultivée en réacteur dans un milieu comportant du glucose, de l'eau et/ou des sels (tel que le sulfate de magnésium, le phosphate de monopotassium, le nitrate de sodium, et/ou le nitrate d'ammonium). Ce milieu de culture est également mis en oeuvre dans le procédé de fermentation. En effet, d'une manière générale, le milieu de fermentation du procédé de fermentation, comporte un milieu de culture et le substrat carboné.

Avantageusement, les différents composants du milieu (glucose et souche en particulier) sont stérilisés séparément avant introduction dans le réacteur.

La température du milieu est de préférence comprise entre 20°C et 35°C, plus préférentiellement entre 25°C et 30°C.

Le(s) MEL(s) ainsi obtenu(s) à partir d'une matière première d'origine renouvelable, telle qu'une huile végétale ou animale, de préférence une huile végétale, est/sont bio-renouvelable(s).

De tels MEL(s) sont également faiblement toxiques et biodégradables.

Le brut réactionnel obtenu à l'issue du procédé de fermentation, est ce qui est appelé dans la présente demande, le brut de fermentation.

Le brut de fermentation comporte généralement au moins un MEL, au moins du substrat carboné résiduel et/ou un sous-produit du substrat carboné, la souche et de l'eau, le sous-produit du substrat carboné résultant de la fermentation.

La séparation du ou des MEL(s) subséquente au procédé de fermentation, a pour objectif de séparer le(s) MEL(s) d'un ou de plusieurs des autres composants du brut de fermentation.

Selon le mode de réalisation préférentiel ci-avant, le brut de fermentation comporte au moins un MEL, au moins un triglycéride et/ou au moins un acide gras, de l'eau et une souche du genre *Pseudozyma.*

La séparation du ou des MEL(s) d'un ou de plusieurs des autres composants du brut de fermentation peut se faire par toute méthode de séparation connue de l'homme du métier.

Avantageusement, la séparation du ou des MEL(s) d'un ou de plusieurs des autres composants peut comprendre une ou plusieurs des méthodes suivantes :
- décantation,
- centrifugation,
- filtration,
- évaporation,
- extraction liquide/liquide,
- passage sur un substrat minéral ou une résine

En particulier, la souche peut être séparée par décantation, filtration, et/ou centrifugation ; l'eau peut être séparée par décantation, évaporation, centrifugation, et/ou passage sur un substrat minéral qui est un adsorbant; les acides gras et les triglycérides peuvent être séparés par extraction liquide/liquide et/ou par passage sur un substrat minéral ou une résine.

La composition selon l'invention comporte donc un pétrole, de l'eau et au moins un MEL.

La quantité de pétrole présente dans la composition selon l'invention est comprise entre 15% et 80% en volume par rapport au volume de la composition.

De préférence, la quantité de pétrole présente dans la composition selon l'invention est comprise entre 20% et 70%, plus préférentiellement entre 30% et 60%, encore plus préférentiellement entre 40% et 60% en volume, par rapport au volume de la composition.

De préférence, le pétrole présente une viscosité dynamique à 90°C à pression atmosphérique inférieure à 200 mPa.s, plus préférentiellement inférieure à 150 mPa.s.

Avantageusement, le pétrole présente une viscosité dynamique à 20°C à pression atmosphérique inférieure à 200 mPa.s, plus préférentiellement inférieure à 150 mPa.s, et/ou une teneur en paraffines inférieure à 70% en poids, plus préférentiellement inférieure à 65% en poids par rapport au poids du pétrole.

La quantité totale de MEL(s) présente dans la composition selon l'invention est comprise entre 0,5 ppm et 100 ppm, par rapport au poids de la composition.

Par quantité totale de MEL(s) présente dans la composition, on entend la quantité de molécules de MEL(s) de formule (I), plus particulièrement, de formule (II) et/ou (III), présente dans ladite composition.

De préférence, la quantité totale de MEL(s) est comprise entre 2 ppm et 80 ppm, plus préférentiellement entre 3 ppm et 60 ppm, plus préférentiellement encore entre 5 ppm et 50 ppm, par rapport au poids de la composition.

Avantageusement, la composition selon l'invention comporte au moins deux MELs, de classes différentes, choisis parmi le groupe constitué par les MELs-A, les MELs-B, les MELs-C et les MELs-D.

Selon un premier mode avantageux de réalisation de la composition selon l'invention, la composition comporte des MEL(s)-A, MEL(s)-B, MEL(s)-C et optionnellement MEL(s)-D, plus préférentiellement des MEL(s)-A, MEL(s)-B, MEL(s)-C et MEL(s)-D.

Plus préférentiellement, la composition selon l'invention comporte des MEL(s)-A et MEL(s)-B à une teneur comprise entre 50% à 95% en poids, de préférence 60% à 85% en poids, les pourcentages en poids étant indiqués par rapport au poids de la quantité totale de MELs.

De préférence, la composition selon l'invention comporte du ou des MEL(s)-C à une teneur supérieure ou égale à 5% en poids, préférentiellement supérieure à 10% en poids, les pourcentages en poids étant indiqués par rapport au poids de la quantité totale de MELs.

Plus particulièrement, la composition selon l'invention comporte des MEL(s)-A et MEL(s)-B à une teneur comprise entre 60% et 80% en poids et du/des MEL(s)-C à une teneur supérieure ou égale à 20% en poids, les pourcentages en poids étant indiqués par rapport au poids de la quantité totale de MELs.

Selon un deuxième mode avantageux de réalisation de la composition selon l'invention, la composition comporte du/des MEL(s)-D à une teneur comprise entre 75% et 100% en poids, de préférence entre 90% et 100% en poids, les pourcentages en poids étant indiqués par rapport au poids de la quantité totale de MELs.

Le(s) MEL(s)-D peu(ven)t être obtenu(s) par désacétylation des MEL(s)-A, MEL(s)-B et MEL(s)-C. Un exemple de réaction de désacétylation des MEL(s)-A, MEL(s)-B et MEL(s)-C utilisant une enzyme hydrolysante est décrite dans la publication suivante : "Enzymatic synthesis of a novel glycolipid biosurfactant, mannosylerythritol lipid-D and its aqueous phase behavior " ; Fukuoka et al.; Carbohydrate Research (2011), 346, 266-271.

La composition selon l'invention peut en outre comporter:
- du substrat carboné résiduel et/ou un sous-produit du substrat carboné, et
- optionnellement, une souche.

Lorsque le substrat carboné est une huile d'origine renouvelable, un sous-produit du substrat carboné est un acide gras. En effet, une huile végétale est principalement (plus de 90% en poids) constituée de triglycérides. L'huile végétale résiduelle est donc composée d'au moins un triglycéride.

Dans ce cas, la composition selon l'invention comporte en outre :
- au moins un triglycéride et/ou au moins un acide gras, et
- optionnellement, une souche.

Par « acide gras », on entend un acide gras libre et/ou sous forme de sel.

La quantité d'acide(s) gras et/ou de triglycéride(s) présente dans la composition selon l'invention peut être comprise entre 1.10⁻⁷ ppm et 80 ppm, de préférence entre 1.10⁻⁴ ppm et 60 ppm, par rapport au poids de la composition.

Plus particulièrement, la composition selon l'invention comporte au moins un triglycéride et au moins un acide gras.

Dans ce cas, la quantité d'acide(s) gras et de triglycéride(s) présente dans la composition selon l'invention peut être comprise entre 1.10⁻⁶ ppm et 100 ppm, de préférence entre 1.10⁻³ ppm et 80 ppm, plus préférentiellement, entre 5.10⁻³ ppm et 60 ppm, plus préférentiellement encore, entre 1.10⁻² ppm et 50 ppm, par rapport au poids de la composition.

Avantageusement, le ou les acide(s) gras comporte(nt) une chaine carbonée comportant entre 8 et 24 atomes de carbone, de préférence, entre 8 et 20 atomes de carbone.

Avantageusement, le ou les triglycéride(s) comportent des groupes acyles dont la chaine carbonée acyclique, saturée ou insaturée, comporte entre 8 et 24 atomes de carbones, de préférence entre 16 et 18 atomes de carbone. Plus particulièrement, la chaine carbonée est linéaire et ne comporte que des atomes de carbone et d'hydrogène, éventuellement substituée par une fonction hydroxyle (OH).

Le(s) MEL(s) peu(ven)t donc être utilisé(s) sous une forme plus ou moins purifiée, c'est-à-dire en mélange avec d'autres composants du milieu de fermentation. Les MELs peuvent ainsi être introduits dans la composition selon l'invention avec son milieu de fermentation, autrement dit, sous la forme du brut de fermentation.

Plus particulièrement, dans la présente demande, et en particulier dans les exemples, lorsque le(s) MEL(s), est/sont en mélange avec au moins un acide gras et/ou au moins un triglycéride, optionnellement de l'eau et/ou une souche, ce mélange est appelé « mélange de MEL(s) ».

Une composition selon l'invention particulièrement préférée, comporte un pétrole, de l'eau et un mélange de MEL(s).

Un premier mélange de MEL(s) préféré est un brut de fermentation, c'est-à-dire au moins un Mel avec son milieu de fermentation.

Le brut de fermentation peut faire l'objet d'une ou plusieurs méthodes de séparation, conduisant à d'autres mélanges de MEL(s) préférés présentant les caractéristiques suivantes :
- une teneur en MEL(s) supérieure ou égale à 30% en poids, préférentiellement supérieure ou égale à 40% en poids, plus préférentiellement supérieure ou égale à 50% en poids ;
- une teneur en autres composants (dont acide(s) gras, triglycéride(s), eau et/ou souche) inférieure ou égale à 70% en poids, préférentiellement inférieure ou égale à 60% en poids, plus préférentiellement inférieure ou égale à 50% en poids ;
les pourcentages en poids étant donnés par rapport au poids du mélange de MEL(s).

Plus particulièrement, selon la ou les méthode(s) de séparation, des mélanges de MEL(s) plus ou moins concentrés en MEL(s) peuvent être obtenus.

Selon un premier mode de réalisation, le mélange de MEL(s) présente les caractéristiques suivantes :
- une teneur en MEL(s) supérieure ou égale à 55% en poids ;
- une teneur en autres composants (dont acide(s) gras, triglycéride(s), eau et/ou souche) inférieure ou égale à 45% en poids ;
les pourcentages en poids étant donnés par rapport au poids du mélange de MEL(s).

Avantageusement, dans ce premier mode de réalisation, la teneur en eau et/ou en souche est inférieure ou égale à 10% en poids, préférentiellement inférieur ou égale à 5% en poids, par rapport au poids du mélange de MEL(s).

Un mélange de MEL(s), et plus particulièrement un mélange de MELs (comportant au moins 2 MELs), peut être obtenu par un procédé de fermentation décrit ci-avant, suivi d'une ou plusieurs étape(s) de séparation, telles que la filtration, la centrifugation, l'évaporation, et/ou l'extraction liquide/liquide.

Selon un deuxième mode de réalisation, le mélange de MEL(s) présente les caractéristiques suivantes :
- une teneur en MEL(s) supérieure ou égale à 90% en poids, préférentiellement supérieure ou égale à 95% en poids, plus préférentiellement supérieure ou égale à 98% en poids ;
- une teneur en autre composants (dont acide(s) gras, triglycéride(s), eau et/ou souche) inférieure ou égale à 10% en poids, préférentiellement inférieure ou égale à 5% en poids, plus préférentiellement inférieure ou égale à 2% en poids ;
les pourcentages en poids étant donnés par rapport au poids du mélange de MEL(s).

Avantageusement, dans ce deuxième mode de réalisation, la teneur en eau et/ou en souche est inférieure ou égale à 2% en poids, par rapport au poids du mélange de MEL(s).

En effet, il est également possible d'obtenir un mélange de MEL(s) présentant une teneur en MEL(s) supérieure ou égale à 90% en poids, de préférence par rapport au poids total du mélange de MEL(s). Ce mélange de MEL(s), et plus particulièrement un mélange de MELs (comportant au moins 2 MELs) peut, par exemple, être obtenu à l'aide d'un procédé de fermentation décrit ci-avant auquel est ajouté une ou plusieurs méthode(s) de séparation supplémentaire(s). Des exemples de méthodes de séparation adaptées, sont une extraction liquide/liquide et un passage sur un substrat minéral. Le passage sur un substrat minéral peut être une chromatographie, telle qu'une chromatographie d'adsorption sur colonne de silice, réalisée à l'aide de solvants adaptés. De tels solvants sont connus de l'homme du métier.

De préférence, les mélanges de MELs, quel que soit le mode de réalisation, comportent des MELs de différentes classes, en général au moins des MEL(s)-A, MEL(s)-B et MEL(s)-C. Préférentiellement, ces mélanges de MELs comporte des MEL(s)-A, MEL(s)-B, MEL(s)-C et MEL(s)-D.

En outre, les mélanges de MELs comportent avantageusement des MEL(s)-A et MEL(s)-B à une teneur comprise entre 50 et 95% en poids, de préférence comprise entre 60 et 85% en poids, les pourcentages en poids étant indiqués par rapport au poids de la quantité totale de MELs.

De plus, les mélanges de MELs comportent avantageusement du/des MEL(s)-C à une teneur supérieure ou égale à 5% en poids, de préférence supérieure ou égale à 10% en poids, les pourcentages en poids étant indiqués par rapport au poids de la quantité totale de MELs.

Plus particulièrement, un mélange de MELs peut comporter des MELs-A et MELs-B à une teneur comprise entre 60% et 75% en poids, et des MELs-C à une teneur supérieure ou égale à 20% en poids, les pourcentages en poids étant indiqués par rapport au poids de la quantité totale de MELs.

De tels mélanges de MELs sont par exemple obtenus à l'aide d'un procédé de fermentation tel que ceux décrits ci-avant.

Des exemples de mélanges de MELs et de leur procédé d'obtention sont également décrits dans la publication suivante : "Downstream processing of mannosylerythritol lipids produced by Pseudozyma aphidis" ; Rau et al.; European Journal of Lipids Science and Technology (2005), 107, 373-380.

Dans les mélanges de MEL(s), quel que soit le mode de réalisation, les MEL(s)-A, MEL(s)-B et/ou MEL(s)-C peuvent être désacétylés. Les mélanges de MEL(s) comportent alors du/des MEL(s)-D à une teneur comprise entre 75% et 100% en poids, de préférence entre 90% et 100% en poids, les pourcentages en poids étant indiqués par rapport au poids de la quantité totale de MEL(s).

Avantageusement, la composition selon l'invention comporte en outre un tensioactif autre qu'un MEL.

De préférence, le tensioactif est choisi parmi les tensioactifs utilisés comme désémulsifiants d'émulsions d'eau et de pétrole.

De préférence, le tensioactif a un équilibre hydrophile/lipophile (HLB, pour Hydrophilic-Lipophilic Balance) supérieure à 6, plus préférentiellement supérieur à 8.

On entend par HLB (Hydrophilic-Lipophilic Balance) l'équilibre entre la dimension et la force du groupe hydrophile et la dimension et la force du groupe lipophile de l'agent tensioactif. La valeur HLB selon GRIFFIN est définie dans J. Soc. Cosm. Chem. 1954 (volume 5), pages 249-256.

De préférence, le tensioactif est choisi parmi le groupe constitué par les polymères et copolymères d'oxyde d'éthylène et/ou d'oxyde de propylène ; les esters de polyglycérols ; les esters de sorbitan ; les amines, telles que l'hexylamine ou l'octylamine ; les composés alkoxylés tels que les phénols éthoxylés, les alcools éthoxylés, les esters de sorbitan alkoxylés, et les amines éthoxylées ; et leurs mélanges.

Plus préférentiellement, le tensioactif est choisi parmi le groupe constitué par les composés alkoxylés tels que les phénols éthoxylés, les alcools éthoxylés, les esters de sorbitan alkoxylés, et les amines éthoxylées ; les esters de polyglycérols ; et leurs mélanges.

Alternativement, le tensioactif est choisi parmi les polymères et copolymères d'oxyde d'éthylène et/ou d'oxyde de propylène.

L'invention concerne également un procédé de désémulsification d'une émulsion d'eau et de pétrole, tel que défini dans les revendications 3-6 et comprenant une mise en contact d'un désémulsifiant avec l'émulsion, le désémulsifiant comportant un au moins un MEL.

Le au moins un MEL est tel que décrit ci-avant et peut être obtenu par les procédés de fermentation décrits ci-avant.

Avantageusement, le désémulsifiant comporte au moins deux MELs, de classes différentes, choisis parmi le groupe constitué par les MELs-A, les MELs-B, les MELs-C et les MELs-D.

Selon un premier mode avantageux de réalisation du procédé selon l'invention, le désémulsifiant comporte des MEL(s)-A, MEL(s)-B, MEL(s)-C et optionnellement MEL(s)-D, plus préférentiellement des MEL(s)-A, MEL(s)-B, MEL(s)-C et MEL(s)-D.

De préférence, le désémulsifiant comporte du ou des MEL(s)-A et du ou des MEL(s)-B à une teneur comprise entre 50% à 90% en poids, de préférence 60% à 85% en poids, les pourcentages en poids étant indiqués par rapport au poids de la quantité totale de MELs.

De préférence, le désémulsifiant comporte du ou des MEL(s)-C à une teneur supérieure 5% en poids, préférentiellement supérieure à 10% en poids, les pourcentages en poids étant indiqués par rapport au poids de la quantité totale de MELs.

Plus particulièrement, le désémulsifiant comporte des MEL(s)-A et MEL(s)-B à une teneur comprise entre 60% et 80% en poids et du/des MEL(s)-C à une teneur supérieure ou égale à 20% en poids, les pourcentages en poids étant indiqués par rapport au poids de la quantité totale de MELs.

Selon un deuxième mode avantageux de réalisation du procédé, le désémulsifiant comporte du/des MEL(s)-D à une teneur comprise entre 75% et 100% en poids, de préférence entre 90% et 100% en poids, les pourcentages en poids étant indiqués par rapport au poids de la quantité totale de MELs.

Le(s) MEL(s) a/ont pour effet de séparer et/ou d'accélérer la séparation de l'eau et du pétrole émulsionnés. Comme l'illustrent les Exemples 2 b)-d), l'effet de l'addition d'un MEL est visible au bout d'1 heure de décantation de l'émulsion à température ambiante, soit à 25°C, plus ou moins 5°C, à pression atmosphérique. Cet effet pourra être amélioré à des températures plus élevées. Dans le cas d'émulsions eau dans pétrole, plus le pH est acide, plus la désémulsification est améliorée.

De préférence, dans le procédé de désémulsification selon l'invention, la quantité de pétrole est comprise entre 15 et 80% en volume par rapport au volume de l'émulsion.

Plus préférentiellement, la quantité de pétrole est comprise entre 20% et 70%, plus préférentiellement encore entre 30% et 60%, plus particulièrement entre 40% et 60% en volume, par rapport au volume de l'émulsion.

Dans le procédé de désémulsification selon l'invention, la quantité totale de lipide(s) de mannosylérythritol est comprise entre 0,5 ppm et 100 ppm, par rapport au poids de l'émulsion.

Par quantité totale de MEL(s) présente dans l'émulsion, on entend la quantité de molécules de MEL(s) de formule (I), plus particulièrement, de formule (II) et/ou (III), présente dans ladite émulsion.

Plus préférentiellement, la quantité totale de MEL(s) est comprise entre 2 ppm et 80 ppm, plus préférentiellement encore entre 3 ppm et 60 ppm, plus particulièrement entre 5 ppm et 50 ppm, par rapport au poids de l'émulsion.

Avantageusement, le désémulsifiant du procédé de désémulsification selon l'invention, comporte en outre, au moins un triglycéride et/ou au moins un acide gras.

La quantité d'acide(s) gras et/ou de triglycéride(s) présente dans l'émulsion peut être comprise entre 1.10⁻⁷ ppm et 80 ppm, de préférence entre 1.10⁻⁴ ppm et 60 ppm, par rapport au poids de l'émulsion.

Plus particulièrement, le désémulsifiant du procédé de désémulsification selon l'invention, comporte en outre, au moins un triglycéride et au moins un acide gras.

Dans ce cas, la quantité d'acide(s) gras et de triglycéride(s) présente l'émulsion peut être comprise entre 1.10⁻⁶ ppm et 100 ppm, de préférence entre 1.10⁻³ ppm et 80 ppm, plus préférentiellement, entre 5.10⁻³ ppm et 60 ppm, plus préférentiellement encore, entre 1.10⁻² ppm et 50 ppm, par rapport au poids de l'émulsion.

Avantageusement, le ou les acide(s) gras comporte(nt) une chaine carbonée comportant entre 8 et 24 atomes de carbone, de préférence, entre 8 et 20 atomes de carbone.

Avantageusement, le ou les triglycéride(s) comportent des groupes acyles dont la chaine carbonée acyclique comporte entre 8 et 24 atomes de carbones, de préférence entre 16 et 18 atomes de carbone.

Selon un mode de réalisation particulier du procédé de désémulsification selon l'invention, le désémulsifiant comporte un mélange de MEL(s).

Le mélange de MEL(s) est tel que décrit ci-avant.

Le au moins un triglycéride et/ou le au moins un acide gras peuvent être introduits concomitamment avec le au moins un MEL.

Avantageusement, le ou les acide(s) gras et/ou triglycéride(s) peut/peuvent être issu(s) de l'huile renouvelable mise en oeuvre lors d'un procédé de fermentation décrit ci-avant.

Afin de faciliter la manipulation du MEL, le MEL ou les MELs ou le mélange de MEL(s) peu(ven)t être dispersé(s) dans de l'eau et/ou dans un solvant organique, préalablement à sa/leur mise en contact avec l'émulsion.

De préférence, dans le procédé de désémulsification selon l'invention, le désémulsifiant comporte en outre un tensioactif autre que le lipide de mannosylérythritol.

Généralement, un mélange de tensioactifs est utilisé pour désémulsifier des émulsions d'eau et de pétrole.

De préférence, le tensioactif est choisi parmi les tensioactifs utilisés comme désémulsifiants d'émulsions d'eau et de pétrole.

De préférence, le procédé de désémulsification selon l'invention est un procédé de désémulsification d'une émulsion eau dans pétrole.

Avantageusement, le tensioactif a un équilibre hydrophile/lipophile (HLB, pour Hydrophilic-Lipophilic Balance) supérieure à 6, plus préférentiellement supérieur à 8.

De préférence, le tensioactif est choisi parmi le groupe constitué par les polymères et copolymères d'oxyde d'éthylène et/ou d'oxyde de propylène ; les esters de polyglycérols ; les esters de sorbitan ; les amines, telles que l'hexylamine ou l'octylamine ; les composés alkoxylés tels que les phénols éthoxylés, les alcools éthoxylés, les esters de sorbitan alkoxylés, et les amines éthoxylées ; et leurs mélanges.

Plus préférentiellement, le tensioactif est choisi parmi les composés alkoxylés tels que les phénols éthoxylés, les alcools éthoxylés, les esters de sorbitan alkoxylés, les amines éthoxylées ; les esters de polyglycérols ; et leurs mélanges.

Alternativement, le tensioactif est choisi parmi les polymères et copolymères d'oxyde d'éthylène et/ou d'oxyde de propylène.

De préférence, la quantité totale de tensioactif(s) autre qu'un MEL, est comprise entre 1 ppm et 10000 ppm, plus préférentiellement entre 5 ppm et 1000 ppm, plus préférentiellement encore, entre 10 ppm et 200 ppm, par rapport au poids de l'émulsion.

Par quantité totale de tensioactif(s) autre qu'un MEL, on entend la quantité de molécules de tensioactif(s) autre qu'un MEL, présente dans ladite émulsion.

Un procédé de désémulsification selon l'invention, particulièrement avantageux, concerne une émulsion eau dans pétrole, le volume de pétrole représentant entre 30% et 60%, préférentiellement entre 40% et 60%, du volume total de l'émulsion, et comprend une mise en contact d'un désémulsifiant avec l'émulsion, le désémulsifiant comportant au moins un lipide de mannosylérythritol, préférentiellement un mélange de MEL(s), plus préférentiellement un brut de fermentation, et un tensioactif autre qu'un MEL.

La mise en contact du au moins un MEL et celle du tensioactif autre qu'un MEL, avec l'émulsion, peuvent être réalisées concomitamment ou l'une après l'autre.

Lorsque le désémulsifiant comporte plusieurs constituants, il peut être préalablement préparé avant sa mise en contact avec l'émulsion ou préparé *in situ*, dans l'émulsion.

Le au moins un MEL et/ou le tensioactif autre qu'un MEL peuvent être dispersé(s) dans de l'eau et/ou dans un solvant organique, préalablement à leur mise en contact avec l'émulsion. Le ratio en poids, quantité totale de MEL(s) / quantité totale de tensioactif(s) autre(s) qu'un MEL, varie entre 1/99 et 99/1, préférentiellement entre 10/90 et 90/10.

Un procédé de désémulsification selon l'invention, comporte, outre la mise en contact du désémulsifiant avec l'émulsion :
- la séparation du pétrole et de l'eau ; et
- la récupération du pétrole.

Lors du procédé, l'émulsion peut être chauffée pour améliorer la séparation de l'eau et du pétrole, de préférence entre 40° et 90°C, plus préférentiellement entre 50° et 80°C, à pression atmosphérique.

L'invention vise également l'utilisation d'un lipide de mannosylérythritol en tant que désémulsifiant.

Avantageusement, l'utilisation selon l'invention met en oeuvre au moins deux MELs, de classes différentes, choisis parmi le groupe constitué par les MELs-A, les MELs-B, les MELs-C et les MELs-D.

Selon un premier mode avantageux de réalisation de l'utilisation selon l'invention, l'utilisation met en oeuvre des MEL(s)-A, MEL(s)-B, MEL(s)-C et optionnellement MEL(s)-D, plus préférentiellement encore des MEL(s)-A, MEL(s)-B, MEL(s)-C et MEL(s)-D.

De préférence, l'utilisation met en oeuvre des MEL(s)-A et MEL(s)-B à une teneur comprise entre 50% à 90% en poids, de préférence 60% à 85% en poids, les pourcentages en poids étant indiqués par rapport au poids de la quantité totale de MELs.

De préférence, l'utilisation met en oeuvre du ou des MEL(s)-C à une teneur supérieure à 5% en poids, préférentiellement supérieure à 10% en poids, les pourcentages en poids étant indiqués par rapport au poids de la quantité totale de MELs.

Plus particulièrement, l'utilisation met en oeuvre des MEL(s)-A et MEL(s)-B à une teneur comprise entre 60% et 80% en poids et du/des MEL(s)-C à une teneur supérieure ou égale à 20% en poids, les pourcentages en poids étant indiqués par rapport au poids de la quantité totale de MELs.

Selon un deuxième mode avantageux de réalisation de l'utilisation selon l'invention, l'utilisation met en oeuvre du/des MEL(s)-D à une teneur comprise entre 75% et 100% en poids, de préférence entre 90% et 100% en poids, les pourcentages en poids étant indiqués par rapport au poids de la quantité totale de MELs.

Avantageusement, le MEL est sous forme de mélange de MEL(s). C'est alors au moins un MEL, au moins un acide gras et/ou au moins un triglycéride, et optionnellement une souche, qui sont utilisés en tant que désémulsifiant. Le mélange de MEL(s) présente les caractéristiques telles que décrites ci-avant.

De préférence, dans l'utilisation selon l'invention, quel que soit le mode de réalisation, un brut de fermentation est utilisé en tant que désémulsifiant.

De préférence, le MEL est utilisé en tant que désémulsifiant d'émulsion d'eau et de pétrole, plus préférentiellement, d'émulsion d'eau dans pétrole.

L'invention sera mieux comprise au vu des exemples qui suivent, donnés à titre illustratif.

### Exemple 1 : Préparation de mélanges de MELs, d'une composition selon l'invention et désémulsification

### a) Obtention de MELs

Les MELs ont été obtenus par un procédé de fermentation comprenant les étapes suivantes :
- la conversion d'un substrat carboné tel qu'une huile végétale (colza) par une souche de levure telle que *Pseudozyma aphidis* pour obtenir les MELs; et
- la séparation des MELs ainsi obtenus.

L'étape de séparation des MELs a été effectuée par filtration, centrifugation et évaporation.

A l'issue de l'étape de séparation des MELs, un premier mélange comportant des MELs (mélange de MELs 1A) est obtenu, qui présente les caractéristiques suivantes :
- Teneur en MELs: 55% en poids
- Teneur en autres composants : 45% en poids (dont 42% en poids d'acides gras et de triglycérides et 3% en poids d'eau et de souche),
les pourcentages en poids étant donnés par rapport au poids total du mélange obtenu.

Une étape de séparation supplémentaire appliquée au mélange de MELs 1A a ensuite été réalisée par chromatographie d'adsorption sur colonne de silice. Un second mélange de MELs (mélange de MELs 1B) a ainsi été obtenu, qui présente les caractéristiques suivantes :
- Teneur en MELs : > 98% en poids
- Teneur en autres composants : < 2% en poids (dont acides gras et triglycérides).

La composition des MELs dans le mélange de MELs 1B a été analysée par chromatographie en phase liquide à haute performance (HPLC).

Pour cette analyse, 50 mg du mélange de MELs ont été pesés et 3 mL de chloroforme acidifié à 0,2% en acide formique à 80% ont été ajoutés. Une fois le mélange de MELs dissout, la solution est filtrée sur filtre 0,2µm ou sur 3 filtres 0,45µm de diamètre. 50 µL de filtrat limpide est prélevé auquel est ajouté 950 µL de chloroforme acidifié dans une fiole analytique de 2 mL. 10 µL de cette solution est injecté dans un système HPLC Shimadzu LC-20 AD muni d'un détecteur ELSD Sedex 90, équipé d'une Colonne Nova-Pak silice 60A, 150*3.9mm 4µm et d'une Pré-colonne Nova-Pak silice 60A, 20*3.9mm 4µm. La température d'analyse est de 30°C.

Les MELs comportent des MELs-A (52% en poids), des MELs-B (12% en poids), des MELs-C (35% en poids), et des MELs-D (1% en poids), les pourcentages en poids étant donnés par rapport au poids de la quantité totale de MELs.

### b) Préparation d'une composition selon l'invention et procédé de désémulsification

Pour cet exemple, un pétrole français a été utilisé.

La teneur en eau est de 25%, déterminée avec un Karl Fisher selon la méthode ASTM D1744-92.

Dans la présente demande, sauf indication contraire, lorsqu'une norme est indiquée, il s'agit de celle en vigueur à la date de dépôt.

Sa viscosité dynamique à 25°C est de 50 mPa.s, déterminées à l'aide d'un viscosimètre Stabinger SVM 300/G2 de Antor Parr selon la norme ASTM D 7042-04 de 2004.

Sa teneur en asphaltènes est de 0,8% en poids, mesurée selon la norme ASTM D2007-03 de 2008.

A 100 mL de ce pétrole sont ajoutés 100 ppm d'un mélange de MELs 1A. L'ensemble est agité pendant 5 minutes à 500 tours par minutes puis introduit dans une éprouvette graduée de 100 mL.

Après 1 heure à température ambiante, on observe une séparation des phases aqueuse et huileuse et 21 mL d'eau sont récupérées.

### Exemple 2 : Effet du MEL sur une émulsion eau dans pétrole après 1 heure de décantation

L'objectif de cet exemple est de montrer l'effet du MEL sur des émulsions d'eau dans différents pétroles, avec des ratio eau/pétrole différents, ainsi que l'effet de la quantité de MEL introduite dans l'émulsion.

### a) Produits utilisés

Les produits qui ont été utilisés dans cet Exemple sont les suivants :
- les mélanges de MELs 1A et 1B préparés à l'Exemple 1
- les pétroles :
   - Pétrole de Pennsylvanie « extra-light, sweet, paraffinic »
   - Pétrole d'Alaska (North Slope Prudhoe Bay) «medium-heavy sour»
   - Pétrole du Bassin Parisien
   - Pétrole du Texas « sour »
   - Pétrole du Dakota du Nord « sweet »
- eau déminéralisée.

Le Tableau 1 ci-dessous présente les valeurs des caractéristiques des pétroles utilisés dans l'Exemple 2.

**Tableau 1 : Caractéristiques des pétroles utilisés dans l'Exemple 2**

| Pétrole | Extra-light sweet paraffinic Crude Oil | Medium-heavy, Sour Alaska Crude Oil | PETROREP Crude Oil | Texas Unrefined Crude Oil | North Dakota Unrefined Crude Oil |
|---|---|---|---|---|---|
| Fournisseur | ONTA | ONTA | PETROREP | JANULUS | JANULUS |
| Origine | Pennsylvanie | Alaska North Slope Prudhoe Bay | Bassin parisien | Texas | Dakota du Nord |
| Couleur | Marron vert | Noir foncé | Marron foncé | Jaune marron / vert noir | Jaune marron |
| Densité API (°) | 43,2 | 26,8 | 36 | 39,6 | 40-43 |
| Viscosité dynamique à 20°C (mPa.s) | 3,06 | 32,86 | 30,75 | 25,74 | 2,13 |
| Indice d'acide (mg KOH/g) | 0,344 | 2,22 | 0,18 | 0,04 | 0,06 |

| Teneurs en : | | | | | |
|---|---|---|---|---|---|
| Soufre (mg/kg) | 650 | 10400 | 1860 | 16400 | 500 |
| Azote (mg/kg) | < 40 | 100 | 860 | 1000 | 160 |
| Asphaltènes (% en poids) | 41,4 | 6,4 | 32,9 | 28,9 | 49,6 |
| Paraffines (% en poids) | 44,0 | 62,7 | 37,9 | 30,0 | 36,7 |
| Composés polaires (% en poids) | 1,0 | 11,4 | 4,6 | 5,2 | 0,8 |
| Aromatiques (% en poids) | 13,6 | 19,5 | 24,6 | 35,9 | 12,9 |

Les densités API sont données par le fournisseur avec les pétroles correspondants.

Les viscosités dynamiques ont été déterminées à l'aide d'un viscosimètre Stabinger SVM 300/G2 de Antor Parr selon la norme ASTM D 7042-04 de 2004.

Les indices d'acide ont été déterminés selon la norme NF EN ISO 660 de septembre 2009.

Les teneurs en soufre ont été déterminées selon la norme ASTM 5453 de 2012.

Les teneurs en azote ont été mesurées selon la norme ASTM D5762 de janvier 2012.

Les teneurs en asphaltènes, paraffines, composés polaires et aromatiques, ont été mesurées selon la norme ASTM D2007-03 de 2008.

### b) Procédé de préparation des différentes émulsions

Une certaine quantité d'un mélange de MELs est introduite dans 100 mL d'eau déminéralisée et le tout agité jusqu'à homogénéité de la solution. La quantité du mélange de MELs est ajustée selon la teneur en MELs souhaitée dans l'émulsion.

Selon le ratio eau/pétrole souhaité, les quantités requises d'eau déminéralisée contenant les MELs (de 80 à 20 mL) et de pétrole (de 20 à 80 mL respectivement) ont été introduites dans un contenant, et l'ensemble agité avec un mélangeur type Ultra-Turrax à 11600 tours par minute pendant 2 minutes. Chaque émulsion obtenue a été versée dans une éprouvette graduée de 100 mL pour suivre la séparation du pétrole et de l'eau à température ambiante.

### c) Résultats de désémulsification avec du pétrole issu du bassin parisien

Les émulsions ont été préparées selon le protocole décrit ci-avant avec du pétrole du bassin Parisien et selon les quantités indiquées dans les Tableaux 2 à 4 ci-après.

La lecture des volumes d'eau est réalisée après 1 heure de décantation à température ambiante. Les pourcentages d'eau récupérée correspondent aux volumes d'eau lus sur l'éprouvette graduée rapportés aux volumes de solutions aqueuses introduits. Les essais sont réalisés en triplicate.

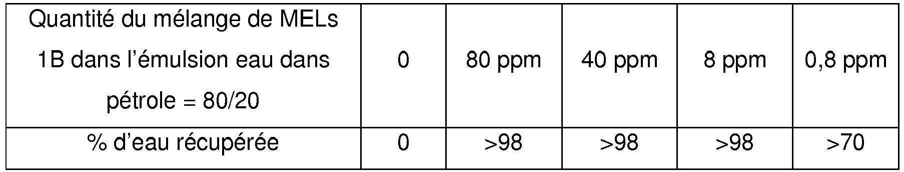

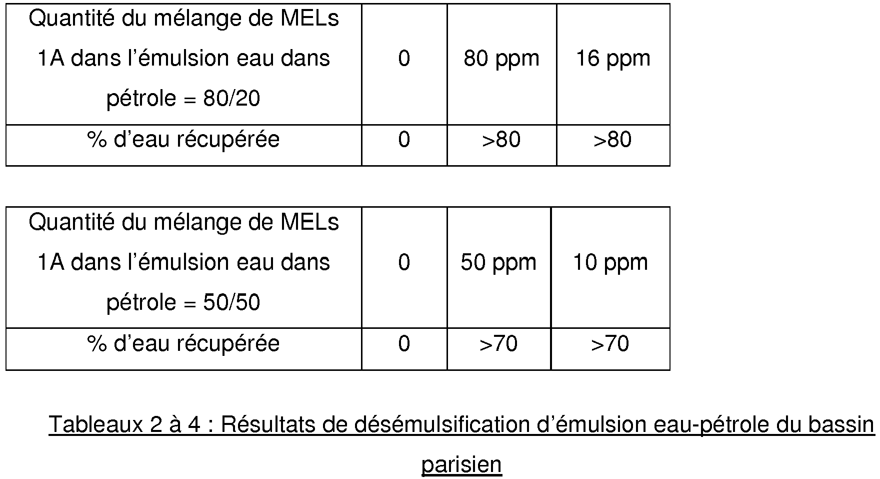

Les essais ont été reproduits en utilisant de l'eau de mer. Les séparations de l'eau et du pétrole ont été obtenues plus rapidement, en 30 minutes à température ambiante.

### d) Résultats de désémulsification avec du pétrole issu du bassin parisien, de Pennsylvanie, d'Alaska et du Texas

Les émulsions eau dans pétrole de cet exemple ont été préparées selon le protocole décrit à l'Exemple 2 b) avec les pétroles issus du bassin parisien, de Pennsylvanie, d'Alaska et du Texas et selon les quantités indiquées dans le Tableau 5.

La lecture des volumes d'eau est réalisée après 1 heure de décantation à température ambiante. Les pourcentages d'eau récupérée correspondent aux volumes d'eau lus sur l'éprouvette graduée rapportés aux volumes de solutions aqueuses introduits. Les essais sont réalisés en triplicate.

**Tableau 5 : Résultats de désémulsification d'émulsion eau-pétrole d'origine variée**

| Emulsion eau dans pétrole (50/50) | Parisien | | Pennsylvanie | | Alaska | | Texas | |
|---|---|---|---|---|---|---|---|---|
| eau récupérée (%) sans addition de désémulsifiant | <55 | | <15 | | <85 | | <75 | |
| Quantité du mélange de MELs 1B dans l'émulsion (ppm) | 5 | 25 | 5 | 25 | 5 | 25 | 5 | 25 |
| eau récupérée (%) | >50 | >80 | >98 | >90 | >95 | >90 | >80 | >80 |

### d) Résultats de désémulsification avec du pétrole issu du Dakota

Les émulsions eau dans pétrole de cet exemple ont été préparées selon le protocole décrit à l'Exemple 2 b) avec du pétrole issu du Dakota et selon les quantités indiquées au Tableau 6.

La lecture des volumes d'eau est réalisée après 1 heure de décantation à température ambiante. Les pourcentages d'eau récupérée correspondent aux volumes d'eau lus sur l'éprouvette graduée rapportés aux volumes de solutions aqueuses introduits. Les essais sont réalisés en triplicate.

**Tableau 6 : Résultats de désémulsification d'émulsion eau-pétrole du Dakota**

| Emulsion eau dans pétrole (20/80) | Dakota | |
|---|---|---|
| Quantité du mélange de MELs 1B dans l'émulsion (ppm) | 2 | 10 |
| eau récupérée (%) | >98 | >98 |

Sans MEL, des résultats analogues sont obtenus au bout de 20 heures.

### Exemple 3 : Effet d'un désémulsifiant comportant un MEL et un autre tensioactif sur une émulsion eau dans pétrole

### a) Produits utilisés

Les produits qui ont été utilisés dans cet Exemple sont les suivants :
- le mélange de MELs 1B préparés à l'Exemple 1,
- le tensioactif autre qu'un MEL: éther de nonylphénol polyéthylène glycol, (Tergitol NP-11 commercialisé par Dow Chemical),
- eau déminéralisée,
- pétrole du Texas « sour ».

### b) Procédé de préparation des émulsions

Le protocole est identique à celui décrit à l'Exemple 2 b). Pour cet exemple, trois solutions aqueuses ont été nécessaires, une contenant le mélange de MELs 1B, une autre contenant le tensioactif autre qu'un MEL et une autre contenant le mélange de MELs 1B avec le tensioactif autre qu'un MEL, ce tensioactif étant indiqué ci-avant.

Deux lectures des volumes d'eau sont réalisées, l'une après 1 heure et l'autre après 20 heures de décantation à température ambiante. Les pourcentages d'eau récupérée correspondent aux volumes d'eau lus sur l'éprouvette graduée rapportés aux volumes de solutions aqueuses introduits. Les essais sont réalisés en triplicate.

### c) Résultats : % d'eau récupérée

**Tableau 7 : Résultat d'un essai comparatif**

| Emulsion eau dans pétrole (50/50) | eau récupérée (%) | |
|---|---|---|
| Temps de décantation | 1h | 20h |
| + 0 ppm de MEL | <85% | <85% |
| + 50 ppm d'éther de nonylphénol polyéthylène glycol | | |
| + 25 ppm de MELs | >90% | >90% |
| + 25 ppm d'éther de nonylphénol polyéthylène glycol | | |
| + 50 ppm de MELs | <85% | <85% |
| + 0 ppm d'éther de nonylphénol polyéthylène glycol | | |

A titre indicatif, en partant d'une émulsion eau dans pétrole du Texas (50/50) sans désémulsifiant, moins de 75% d'eau est récupérée après 1 heure de décantation à température ambiante et moins de 80% d'eau est récupérée après 20 heures. La présence de MEL améliore la désémulsification observée avec l'utilisation d'un seul tensioactif autre qu'un MEL.

### Exemple 4 : Exemple comparatif

L'émulsion eau dans pétrole de cet exemple a été préparée selon le protocole décrit à l'Exemple 2 b) avec du pétrole issu d'Alaska et selon les quantités indiquées au Tableau 8.

La lecture du volume d'eau est réalisée après 1 heure à température ambiante. Le pourcentage d'eau récupérée correspond au volume d'eau lu sur l'éprouvette graduée rapporté au volume de solution aqueuse introduit. L'essais est réalisé en triplicate.

**Tableau 8 : Résultat de non désémulsification d'émulsion eau-pétrole d'Alaska**

| Emulsion eau dans pétrole (50/50) | Alaska |
|---|---|
| Quantité du mélange de MELs 1B dans l'émulsion (ppm) | 250 |
| eau récupérée (%) | 0 |

L'ajout d'une trop grande quantité de MEL a pour effet de stabiliser l'émulsion. Aucune séparation entre le pétrole et l'eau n'est observée.

## Revendications

1. Composition comportant du pétrole, de l'eau et au moins un lipide de mannosylérythritol, dans laquelle la quantité de pétrole est comprise entre 15 et 80% en volume par rapport au volume de la composition et dans laquelle la quantité totale de lipide(s) de mannosylérythritol est comprise entre 0,5 ppm et 100 ppm par rapport au poids de la composition.

2. Composition selon la revendication 1, comportant en outre un tensioactif autre qu'un lipide de mannosylérythritol.

3. Procédé de désémulsification d'une émulsion d'eau et de pétrole comprenant la mise en contact d'un désémulsifiant avec l'émulsion, le désémulsifiant comportant au moins un lipide de mannosylérythritol, dans lequel la quantité totale de lipide(s) de mannosylérythritol est comprise entre 0,5 ppm et 100 ppm, par rapport au poids de l'émulsion.

4. Procédé selon la revendication 3, dans lequel la quantité de pétrole est comprise entre 15 et 80% en volume par rapport au volume de l'émulsion.

5. Procédé selon la revendication 3 ou 4, dans lequel le désémulsifiant comporte au moins un triglycéride et/ou au moins un acide gras.

6. Procédé selon l'une quelconque des revendications 3 à 5, dans lequel le désémulsifiant comporte en outre un tensioactif autre qu'un lipide de mannosylérythritol.

7. Utilisation d'un lipide de mannosylérythritol en tant que désémulsifiant.

## Patentansprüche

1. Zusammensetzung, umfassend Rohöl, Wasser und mindestens ein Mannosylerythritollipid, in welcher die Menge an Rohöl zwischen 15 und 80 Volumenprozent in Bezug auf das Volumen der Zusammensetzung beträgt und in welcher die Gesamtmenge an Mannosylerythritollipid(en) zwischen 0,5 ppm und 100 ppm in Bezug auf das Gewicht der Zusammensetzung beträgt.

2. Zusammensetzung nach Anspruch 1, umfassend ferner ein Tensid, das kein Mannosylerythritol ist.

3. Verfahren zum Demulgieren einer Emulsion aus Wasser und Rohöl, umfassend das In-Kontakt-Bringen eines Demulgiermittels mit der Emulsion, wobei das Demulgiermittel mindestens ein Mannosylerythritollipid umfasst, in welchem die Gesamtmenge an Mannosylerythritollipid(en) zwischen 0,5 ppm und 100 ppm in Bezug auf das Gewicht der Emulsion beträgt.

4. Verfahren nach Anspruch 3, in welchem die Menge an Rohöl zwischen 15 und 80 Volumenprozent in Bezug auf das Volumen der Emulsion beträgt.

5. Verfahren nach Anspruch 3 oder 4, in welchem das Demulgiermittel mindestens ein Triglycerid und/oder mindestens eine Fettsäure umfasst.

6. Verfahren nach einem der Ansprüche 3 bis 5, in welchem das Demulgiermittel ferner ein Tensid umfasst, das kein Mannosylerythritollipid ist.

7. Verwendung eines Mannosylerythritollipids als Demulgiermittel.

## Claims

1. Composition comprising petroleum, water and at least one mannosylerythritol lipid, in which the quantity of petroleum is comprised between 15 and 80% by volume with respect to the volume of the composition and in which the total quantity of mannosylerythritol lipid(s) is comprised between 0.5 ppm and 100 ppm with respect to the weight of the composition.

2. Composition according to claim 1, further comprising a surfactant other than a mannosylerythritol lipid.

3. Process for the demulsification of a water and petroleum emulsion comprising bringing a demulsifier into contact with the emulsion, the demulsifier comprising at least one mannosylerythritol lipid, in which the total quantity of mannosylerythritol lipid(s) is comprised between 0.5 ppm and 100 ppm, with respect to the weight of the emulsion.

4. Process according to claim 3, in which the quantity of petroleum is comprised between 15 and 80% by volume with respect to the volume of the emulsion.

5. Process according to claim 3 or 4, in which the demulsifier comprises at least one triglyceride and/or at least one fatty acid.

6. Process according to any one of claims 3 to 5, in which the demulsifier further comprises a surfactant other than a mannosylerythritol lipid.

7. Use of a mannosylerythritol lipid as demulsifier.
